# EUROPÄISCHE PATENTSCHRIFT

(11) **EP 0 878 038 B1**
(45) Veröffentlichungstag und Bekanntmachung des Hinweises auf die Patenterteilung: **10.04.2002**
(21) Anmeldenummer: 96944627.7
(22) Anmeldetag: 20.12.1996
(51) Int. Cl.: H02B 1/56, G06F 1/16

(54) **STEUERGERÄT MIT BEDIENFELD**
CONTROL APPARATUS WITH CONTROL PANEL
APPAREIL DE CONTROLE AVEC TABLEAU DE COMMANDE

(30) Priorität: 29.01.1996 DE 19603097
(43) Veröffentlichungstag der Anmeldung: 18.11.1998
(73) Patentinhaber: Rittal-Werk Rudolf Loh GmbH & Co. KG, 35745 Herborn (DE)
(72) Erfinder: NEUHOF, Markus, D-35630 Ehringshausen (DE)
(74) Vertreter: Fleck, Hermann-Josef, Dr.-Ing.
(86) Internationale Anmeldenummer: EP9605790
(87) Internationale Veröffentlichungsnummer: WO9728586

(56) Entgegenhaltungen:
- EP-A- 0 419 698
- EP-A- 0 432 967
- US-A- 4 961 126
- HEWLETT-PACKARD JOURNAL, Bd. 43, Nr. 5, 1.Oktober 1992, Seiten 41-47, XP000349773 KREBS K R: "MECHANICAL DESIGN OF THE HP 4980 NETWORK ADVISOR"

## Beschreibung

Die Erfindung betrifft ein Steuergerät mit Bedienfeld, das an der vorderen Unterkante des Steuergerätes mittels Verbindungsvorrichtungen abstehend angebracht ist.

Es sind Lösungen bekannt, bei denen das Steuergerät und das Bedienfeld eine Konstruktionseinheit bilden und daher nur zusammen eingesetzt werden können. Da die Verbindungsvorrichtungen dabei mit Teilen des Steuergerätes und/oder des Bedienteiles einstückig ausgebildet sind, nimmt das Bedienfeld mit seiner Oberseite stets dieselbe Winkelstellung zur Vorderseite des Steuergerätes ein. Wird das Steuergerät mit Bedienfeld in unterschiedlichen Höhen angeordnet, dann ist das Bedienfeld nicht optimal einsetzbar und bedienbar.

Aus der EP 0 419 698 A1 ist eine Tastaturkonsole bekannt, die an ein Tischgehäuse angebaut werden kann. Die Tastaturkonsole besitzt einen Flachbildschirm, der gelenkig an ein Tastaturgehäuse anscharniert ist. Damit kann der Flachbildschirm gegenüber dem Tastaturgehäuse verschwenkt werden.

In der EP 0 432 967 A2 ist ein Computergehäuse offenbart, an dem ein Tastaturgehäuse anscharniert ist. Dieses kann in mehreren Stellungen gegenüber dem Computergehäuse verschwenkt werden.

Es ist daher Aufgabe der Erfindung, ein Steuergerät mit Bedienfeld der eingangs erwähnten Art zu schaffen, bei dem Steuergerät und Bedienfeld getrennte Einheiten bilden, jedoch einfach miteinander verbunden werden können und die Möglichkeit besteht, das Bedienfeld in mehrere Winkelstellungen zum Steuergerät einzustellen.

Diese Aufgabe wird nach der Erfindung dadurch gelöst, daß die Verbindungsvorrichtungen als Winkelstücke ausgebildet sind, die aus zwei Schenkelteilen zusammengesetzt sind und um eine parallel zur Unterkante des Steuergerätes ausgerichtete Achse in mehrere Winkelstellungen einstellbar und darin festlegbar sind.

Durch die Ausbildung der Verbindungsvorrichtungen als zweiteilige Winkelstücke ergibt sich eine einfache Verbindung zwischen Steuergerät und Bedienfeld. Über die Achse kann die Winkelstellung zwischen Steuergerät und Bedienfeld leicht verändert und festgelegt werden. Es ist daher möglich, bei unterschiedlichen Einbauhöhen das Bedienfeld optimal einzustellen, so daß es gut einsehbar und bedienbar ist.

Für die leichte Anbringung der Verbindungsvorrichtung ist nach einer Ausgestaltung vorgesehen, daß die freien Enden der Schenkelteile der Verbindungsvorrichtungen mit Rahmen verbunden sind, die die Vorderseite des Steuergerätes und die Oberseite des Bedienfeldes umschließen. Dabei wird ein formschlüssiger Übergang dadurch sichergestellt, daß die freien Enden der Schenkelteile an die Kontur der Rahmen angepaßt sind.

Eine Ausgestaltung der Verbindungen ist dadurch gekennzeichnet, daß die Rahmen vom Steuergerät und Bedienfeld aus Rahmenschenkeln und Eckverbindern zusammengesetzt sind, daß die Schenkelteile Schraubaufnahmen für Befestigungsschrauben aufweisen und daß die Befestigungsschrauben in Schraubkanäle einschraubbar sind, die in die Eckverbinder eingebracht sind. Die Befestigungsschrauben sind dann in den Schenkelteilen und den Eckverbindern abgedeckt untergebracht. Die Rahmenschenkel der Rahmen von Steuergerät und Bedienfeld können nach wie vor als Abschnitte von Profilsträngen ausgebildet sein, da nur die zugekehrten Eckverbinder entsprechend anzupassen und mit Schraubkanälen zu versehen sind.

Für die verschwenkbare Festlegung der beiden Schenkelteile einer Verbindungsvorrichtung ist nach einer Ausgestaltung vorgesehen, daß die Schenkelteile der Verbindungsvorrichtungen an den einander zugekehrten Enden als Lagerflansche ausgebildet sind und mit einer Gewindebohrung bzw. einer Aufnahme für eine Verbindungsschraube oder einen Verbindungshebel vorgesehen sind. Dabei läßt sich die Veränderung der Winkelstellung stufig vornehmen und gleichzeitig arretieren, wenn die Ausgestaltung so ausgeführt ist, daß die Lagerflansche der Schenkelteile auf den einander zugekehrten Seiten mit aufeinander abgestimmten Verzahnungen versehen sind, die um die Achse, d.h. die Gewindebohrung und die Aufnahme für die Verbindungsschraube oder den Verbindungshebel angeordnet und zur stufigen Veränderung der Winkelstellung zwischen den Schenkelteilen vorgesehen sind.

Eine formschlüssige Verbindung und Festlegung wird dabei dadurch erreicht, daß die Zähne und Zahnlücken der als Ring ausgebildeten Verzahnungen radial zur Achse ausgerichtet sind und sich nach außen hin verbreitern. Bei dieser Auslegung können die beiden Schenkelteile in großem Winkelbereich verstellt werden.

Ist dabei vorgesehen, daß die Schenkelteile in Richtung der Achse eine Abmessung aufweisen, die der zugeordneten Abmessung der Eckverbinder der Rahmen entspricht und daß die Lagerflansche in Richtung der Achse zusammen eine Abmessung aufweisen, die der. Abmessung der Schenkelteile entspricht, dann begrenzen die an die Lagerflansche anschließenden Teile der Schenkelteile selbst den Winkelbereich für die Verstellung, da die beiden Schenkelteile der Verbindungsvorrichtung in einer gemeinsamen Verschwenkebene liegen.

Eine einfache Ausgestaltung sieht vor, daß zwei Verbindungsvorrichtungen verwendet sind, die identisch ausgebildet sind, jedoch um 180° verdreht Steuergerät und Bedienfeld miteinander verbinden, und daß die Schenkelteile der beiden Verbindungsvorrichtungen so angeordnet sind, daß die Schenkelteile mit den Gewindebohrungen auf den einander zugekehrten Seiten und die Schenkelteile mit den Aufnahmen für die Verbindungsschrauben oder Verbindungshebel auf den einander abgekehrten Außenseiten der Verbindungsvorrichtungen liegen. Es werden daher nur wenige unterschiedliche Teile benötigt und die Anbringung der Schenkelteile sowie die Veränderung der Winkelstellung sind einfach durchführbar, da die Verbindungsschrauben leicht zugänglich sind.

Aus optimalen und aesthetischen Gründen kann nach einer weiteren Ausgestaltung vorgesehen sein, daß die Verbindungsschrauben in dem Schenkelteil mit versenktem Schraubenkopf untergebracht sind und daß die Verbindungsschrauben mittels einer Abdeckkappe abgedeckt sind.

Die Erfindung wird anhand eines in den Zeichnungen dargestellten Ausführungsbeispiels näher erläutert. Es zeigen:
- Fig. 1: in perspektivischer Ansicht ein Steuergerät und ein Bedienfeld, die mittels zweier Verbindungsvorrichtungen miteinander verbindbar sind,
- Fig. 2: in vergrößerter Frontansicht eine zweiteilige verstellbare Verbindungsvorrichtung,
- Fig. 3: die Verbindungsvorrichtung nach Fig. 2 in zwei Winkelstellungen,
- Fig. 4: einen Schnitt durch die linke Verbindungsvorrichtung nach Fig. 1,
- Fig. 5: einen Schnitt durch die rechte Verbindungsvorrichtung nach Fig. 1 und
- Fig. 6: in perspektivischer Ansicht die beiden Schenkelteile für eine Verbindungsvorrichtung.

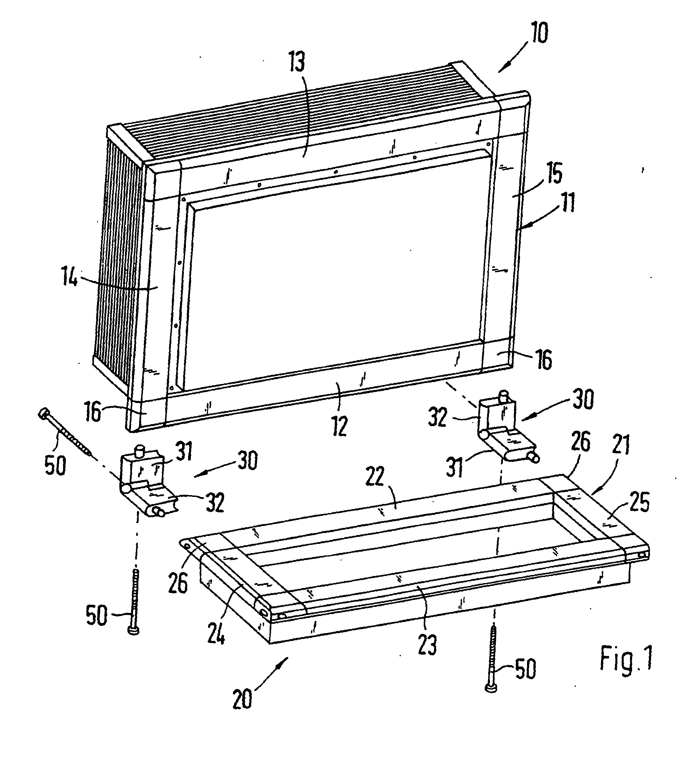

In Fig. 1 sind keine Einbauteile des Steuergerätes 10 und des Bedienfeldes 20 gezeigt. Vielmehr sind nur die Teile bezeichnet, die für die erfindungsgemäße Verbindung von Steuergerät 10 und Bedienfeld 20 erforderlich sind.

Die Vorderseite des Steuergerätes 10 ist im Ausführungsbeispiel von einem Rahmen 11 umschlossen, der aus den Rahmenschenkeln 12, 13, 14, 15 sowie an allen Ecken aus Eckverbindern 16 zusammengesetzt ist. Der übrige Gehäuseaufbau und der Einbau von Teilen in die Frontseite ist hier nicht von Bedeutung. Ähnlich verhält es sich mit dem Bedienfeld 20, das an der Oberseite (Bedienseite) von einem Rahmen 21 aus Rahmenschenkeln 22, 23, 24 und 25 sowie Eckverbindern 26 umschlossen ist.

Im Ausführungsbeispiel sind für die Anbringung des Bedienfeldes 20 an dem Steuergerät 10 zwei Verbiridungsvorrichtungen 30 vorgesehen, die die einander zugekehrten Rahmenschenkel 12 und 22 der Rahmen 11 und 12 im Bereich ihrer anschließenden Eckverbinder 16 und 26 miteinander verbinden. Dabei haben die Verbindungsvorrichtungen 30 eine Breite, die der zugekehrten Abmessung der Eckverbinder 16 und 26 entspricht. Wie in Fig. 1 nur schematisch angedeutet ist, bestehen die Verbindungsvorrichtungen 30 aus jeweils zwei Schenkelteilen 31 und 32, die mittels Befestigungsschrauben 50 mit den Eckverbindern 16 und 26 verschraubt werden, wie noch gezeigt wird.

Die beiden Schenkelteile 31 und 32 einer Verbindungsvorrichtung 30 sind schwenkbar miteinander verbunden, wobei die Achse parallel zu den Rahmenschenkeln 12 und 22 der Rahmen 11 und 21 von Steuergerät 10 und Bedienfeld 20 verläuft. Damit läßt sich nach dem Anbringen der Verbindungsvorrichtungen 30 die Oberseite des Bedienfeldes 20 in mehrere, unterschiedliche Winkelstellungen zur Vorderseite des Steuergerätes 10 einstellen.

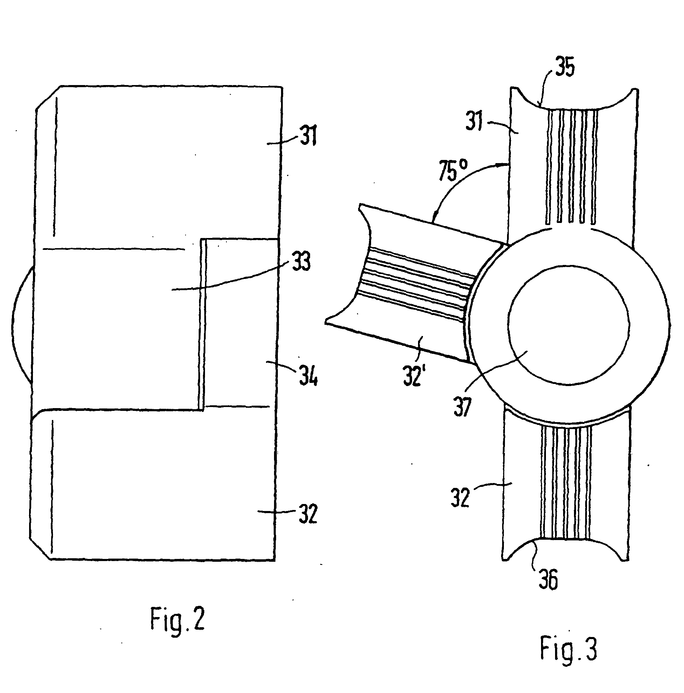

Wie den Fig. 2 und 3 zu entnehmen ist, laufen die freien Enden 35 und 36 der Schenkelteile 31 und 32 in eine Stirnseite aus, die an die Kontur der Eckverbinder 16 und 26 angepaßt ist. Damit läßt sich eine formschlüssige Verbindung erreichen.

Die einander zugekehrten Enden der Schenkelteile 31 und 32 laufen in Lagerflansche 33 und 34 aus, die in Richtung der Achse zusammen wieder eine Abmessung aufweisen, die der Abmessung der Schenkelteile 31 und 32 sowie der Eckverbinder 16 und 26 entspricht. Damit liegen die Schenkelteile 31 und 32 in einer gemeinsamen Schwenkebene und begrenzen daher selbst den Schwenkbereich, wie Fig. 3 zeigt. Ein Hochklappen des Bedienfeldes 20 läßt sich ohne weiteres so erreichen, daß Bedienfeld 20 und Steuergerät 10 im Winkel von 75° stehen, wie die Stellung 32' des Schenkelteils 32 zeigt. In der anderen Schwenkrichtung ist ein Verschwenken auch über die mit 32 in Fig. 3 gezeigte Stellung des Schenkelteils 32 hinaus möglich.

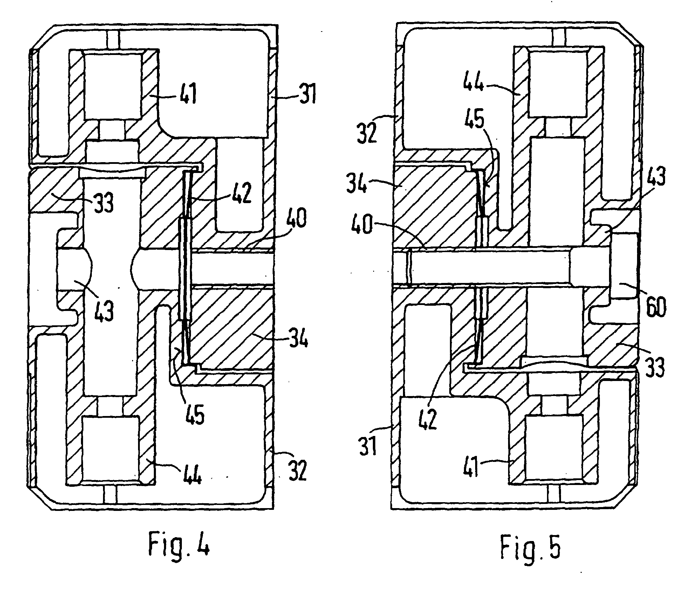

Wie die Schnitte nach Fig. 4 und 5 zeigen, tragen die einander zugekehrten Seiten der Lagerflansche 33 und 34 Verzahnungen 42 und 45, die vorzugsweise als Ring um die durch die Verbindungsschraube 60 gebildete Achse angeordnet sind und radial ausgerichtete Zähne und Zahnlücken aufweisen. Die Zähne und Zahnlücken der Verzahnungen 42 und 45 verbreitern sich nach außen hin, so daß eine spielfreie stufige Veränderung und Festlegung der beiden Schenkelteile 31 und 32 der Verbindungsvorrichtung 30 erreicht wird. Wie die Fig. 4 und 5 zeigen, sind bei beiden Verbindungsvorrichtungen 30 nach Fig. 1 identische Schenkelteile 31 und 32 verwendet, die lediglich um 180° verdreht angebracht sind. In dem Lagerflansch 34 des Schenkelteils 31 ist eine Gewindebohrung 40 eingebracht, in die die in der Aufnahme 43 des Schenkelteils 32 geführte Verbindungsschraube 60 eingeschraubt wird. Die Verzahnungen 42 und 45 bestimmen die Stufen der einstellbaren Winkelstellungen. Anstelle der Verbindungsschrauben 60 können auch andere Verbindungselemente, wie Verbindungshebel oder dgl., eingesetzt werden. Durch die Verdrehung der Verbindungsvorrichtungen 30 wird erreicht, daß die Verbindungsschrauben 60 jeweils von der Außenseite der Verbindungsvorrichtungen 30 her eingeführt und verstellbar sind, was die Veränderung der Winkelstellung zwischen Bedienfeld 20 und Steuergerät 10 erleichtert. Die Ausrichtung der Gewindebohrungen 40, der Aufnahmen 43 und der Verbindungsschrauben 60 ist parallel zu den Rahmenschenkeln 12 und 22 und legt die Schwenkachse fest.

Senkrecht zu dieser Achse sind in die Schenkelteile 31 und 32 Aufnahmen für Schraubhülsen 41 und 44 eingeformt, die die Befestigungsschrauben 50 aufnehmen, mit denen die Schenkelteile 31 und 32 mit den Eckverbindern 16 bzw. 26 verschraubt werden. Dabei können die Schenkelteile 31 und 32 vor dem Verbinden miteinander an dem Steuergerät 10 und dem Bedienfeld 20 angebracht werden.

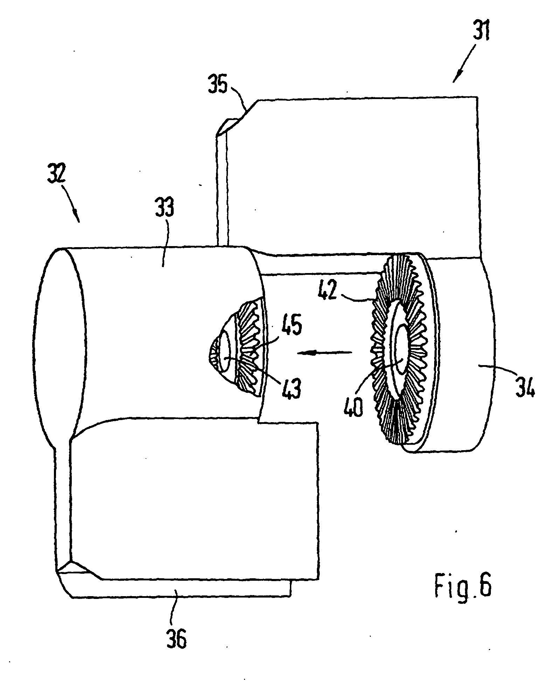

Die perspektivische Ansicht nach Fig. 6 zeigt die räumliche Ausbildung einer Verbindungsvorrichtung. Die Schenkelteile 31 und 32 haben eine im wesentlichen plattenförmige Kontur, die an den den Rahmen 11 und 21 zugekehrten Seiten mit den Enden 35 und 36 an die Kontur der Rahmen 11 und 21 im Bereich ihrer Eckverbinder 16 und 26 angepaßt sind. Die Lagerflansche 33 und 34 haben im wesentlichen runden Querschnitt mit der Aufnahme 43 bzw. der Gewindebohrung 40 im Zentrum. Um die Aufnahme 43 und die Gewindebohrung 40 sind die als Ringe ausgebildeten Verzahnungen 42 und 45 ausgebildet, wobei die Zahnteilung die Stufen für die Veränderung der Winkelstellung zwischen den beiden Schenkelteilen 31 und 32 bestimmen. Es ist erkennbar, daß die Zähne und Zahnlücken sich radial erstrecken und nach außen hin kontinuierlich zunehmen, um die Winkelstellungen praktisch spielfrei festzulegen. Im Bereich der Lagerflansche 33 und 34 sind die Schenkelteile 31 und 32 so ausgelegt, daß sie die gegenseitige Verdrehung nicht beeinträchtigen. Die Fig. 6 läßt auch erkennen, daß die Lagerflansche 33 und 34 in Achsrichtung zusammen eine Abmessung ergeben, die der zugeordneten Abmessung der Schenkelteile 31 und 32 und damit auch der Eckverbinder 16 und 26 entspricht.

## Patentansprüche

1. Steuergerät mit Bedienfeld, das an der vorderen Unterkante des Steuergerätes (10) mittels Verbindungsvorrichtungen (30) abstehend angebracht ist,
**dadurch gekennzeichnet,**
**daß** die Verbindungsvorrichtungen (30) als Winkelstücke ausgebildet sind, die aus zwei Schenkelteilen (31, 32) zusammengesetzt sind und um eine parallel zur Unterkante des Steuergerätes (10) ausgerichtete Achse in mehrere Winkelstellungen einstellbar und darin festlegbar sind.

2. Steuergerät mit Bedienfeld nach Anspruch 1,
**dadurch gekennzeichnet,**
**daß** die freien Enden (35, 36) der Schenkelteile (31, 32) der Verbindungsvorrichtungen (30) mit Rahmen (11, 21) verbunden sind, die die Vorderseite des Steuergerätes (10) und die Oberseite des Bedienfeldes (20) umschließen.

3. Steuergerät mit Bedienfeld nach Anspruch 2,
**dadurch gekennzeichnet,**
**daß** die freien Enden (35, 36) der Schenkelteile (31, 32) an die Kontur der Rahmen (11, 21) angepaßt sind.

4. Steuergerät mit Bedienfeld nach einem der Ansprüche 1 bis 3,
**dadurch gekennzeichnet,**
**daß** die Rahmen (11, 21) vom Steuergerät (10) und Bedienfeld (20) aus Rahmenschenkeln (12, 13, 14, 15 bzw. 22, 23, 24, 25) und Eckverbindern (16 bzw. 26) zusammengesetzt sind,
**daß** die Schenkelteile (31, 32) Schraubaufnahmen (41, 44) für Befestigungsschrauben (50) aufweisen und
**daß** die Befestigungsschrauben (50) in Schraubkanäle einschraubbar sind, die in die Eckverbinder (16 bzw. 26) eingebracht sind.

5. Steuergerät mit Bedienfeld nach einem der Ansprüche 1 bis 4,
**dadurch gekennzeichent,**
**daß** die Schenkelteile (31, 32) der Verbindungsvorrichtungen (30) an den einander zugekehrten Enden als Lagerflansche (33, 34) ausgebildet sind und mit einer Gewindebohrung (40) bzw. einer Aufnahme (43) für eine Verbindungsschraube (60) oder einen Verbindungshebel versehen sind.

6. Steuergerät mit Bedienfeld nach einem der Ansprüche 1 bis 5,
**dadurch gekennzeichnet,**
**daß** die Lagerflansche (33, 34) der Schenkelteile (31, 32) auf den einander zugekehrten Seiten mit aufeinander abgestimmten Verzahnungen (42, 45) versehen sind, die um die Achse, d.h. die Gewindebohrung (40) und die Aufnahme (43) für die Verbindungsschraube (60) oder den Verbindungshebel angeordnet und zur stufigen Veränderung der Winkelstellung zwischen den Schenkelteilen (31, 32) vorgesehen sind.

7. Steuergerät mit Bedienfeld nach Anspruch 6,
**dadurch gekennzeichnet,**
**daß** die Zähne und Zahnlücken der als Ring ausgebildeten Verzahnungen (42, 45) radial zur Achse ausgerichtet sind und sich nach außen hin verbreitern.

8. Steuergerät mit Bedienfeld nach einem der Ansprüche 1 bis 7,
**dadurch gekennzeichnet,**
**daß** die Schenkelteile (31, 32) in Richtung der Achse eine Abmessung aufweisen, die der zugeordneten Abmessung der Eckverbinder (16, 26) der Rahmen (11, 21) entspricht und
**daß** die Lagerflansche (33, 34) in Richtung der Achse zusammen eine Abmessung aufweisen, die der Abmessung der Schenkelteile (31, 32) entspricht.

9. Steuergerät mit Bedienfeld nach einem der Ansprüche 1 bis 8,
**dadurch gekennzeichnet,**
**daß** zwei Verbindungsvorrichtungen (30) verwendet sind, die identisch ausgebildet sind, jedoch um 180° verdreht Steuergerät (10) und Bedienfeld (20) miteinander verbinden, und
**daß** die Schenkelteile (31, 32) der beiden Verbindungsvorrichtungen (30) so angeordnet sind, daß die Schenkelteile (31) mit den Gewindebohrungen (40) auf den einander zugekehrten Seiten und die Schenkelteile (32) mit den Aufnahmen (43) für die Verbindungsschrauben (60) oder Verbindungshebel auf den einander abgekehrten Außenseiten der Verbindungsvorrichtungen (30) liegen.

10. Steuergerät mit Bedienfeld nach einem der Ansprüche 5 bis 9,
**dadurch gekennzeichnet,**
**daß** die Verbindungsschrauben (60) in dem Schenkelteil (32) mit versenktem Schraubenkopf untergebracht sind und
**daß** die Verbindungsschrauben (60) mittels einer Abdeckkappe (37) abgedeckt sind.

## Claims

1. Control apparatus with control panel which is fitted in a projecting manner on the front bottom edge of the control apparatus (10) by means of connecting devices (30), **characterized in that** the connecting devices (30) are designed as angle elements which are made up of two leg parts (31, 32) and can be adjusted, about an axis aligned parallel to the bottom edge of the control apparatus (10), into a plurality of angle positions and secured therein.

2. Control apparatus with control panel according to Claim 1, **characterized in that** the free ends (35, 36) of the leg parts (31, 32) of the connecting devices (30) are connected to frames (11, 21) which enclose the front side of the control apparatus (10) and the top side of the control panel (20).

3. Control apparatus with control panel according to Claim 2, **characterized in that** the free ends (35, 36) of the leg parts (31, 32) are adapted to the contour of the frames (11, 21).

4. Control apparatus with control panel according to one of Claims 1 to 3, **characterized in that** the frames (11, 21) of the control apparatus (10) and control panel (20) are made of frame legs (12, 13, 14, 15 and 22, 23, 24, 25, respectively) and corner connectors (16 and 26, respectively), **in that** the leg parts (31, 32) have screw-connection mounts (41, 44) for fastening screws (50), and **in that** the fastening screws (50) can be screwed into screw-connection channels which are introduced into the corner connectors (16 and 26, respectively).

5. Control apparatus with control panel according to one of Claims 1 to 4, **characterized in that** the leg parts (31, 32) of the connecting devices (30) are designed as bearing flanges (33, 34) at the mutually facing ends and are respectively provided with a threaded bore (40) and a mount (43) for a connecting screw (60) or a connecting lever.

6. Control apparatus with control panel according to one of Claims 1 to 5, **characterized in that** the bearing flanges (33, 34) of the leg parts (31, 32) are provided, on the mutually facing sides, with coordinated toothing formations (42, 45) which are arranged about the axis, i.e. the threaded bore (40) and the mount (43) for the connecting screw (60) or the connecting lever, and are provided for changing the angle position between the leg parts (31, 32) in a stepped manner.

7. Control apparatus with control panel according to Claim 6, **characterized in that** the teeth and tooth gaps of the ring-design toothing formations (42, 45) are aligned radially in relation to the axis and widen in the outward direction.

8. Control apparatus with control panel according to one of Claims 1 to 7, **characterized in that** the leg parts (31, 32) have a dimension in the direction of the axis which corresponds to the associated dimension of the corner connectors (16, 26) of the frames (11, 21), and **in that** the bearing flanges (33, 34) together have a dimension in the direction of the axis which corresponds to the dimension of the leg parts (31, 32).

9. Control apparatus with control panel according to one of Claims 1 to 8, **characterized in that** use is made of two connecting devices (30) which are of identical design but connect the control apparatus (10) and control panel (20) to one another in a state in which they are rotated through 180°, and **in that** the leg parts (31, 32) of the two connecting devices (30) are arranged such that the leg parts (31) are located with the threaded bores (40) on the mutually facing sides, and the leg parts (32) are located with the mounts (43) for the connecting screws (60) or connecting levers on the mutually remote, outer sides, of the connecting devices (30).

10. Control apparatus with control panel according to one of Claims 5 to 9, **characterized in that** the connecting screws (60) are accommodated in the leg part (32) with the screw head countersunk, and **in that** the connecting screws (60) are covered by means of a covering cap (37).

## Revendications

1. Appareil de contrôle avec tableau de commande monté en déport au moyen de dispositifs de connexion (30) sur l'arête inférieure avant de l'appareil de contrôle (10), **caractérisé en ce que** les dispositifs de connexion (30) sont formés en tant que pièces coudées qui sont constituées de deux parties de branche (31, 32) et peuvent être ajustées autour d'un axe orienté parallèlement à l'arête inférieure de l'appareil de contrôle (10) suivant plusieurs positions angulaires et fixées dans ces positions.

2. Appareil de contrôle avec tableau de commande selon la revendication 1, **caractérisé en ce que** les extrémités libres (35, 36) des parties de branche (31, 32) des dispositifs de connexion (30) sont connectées à des cadres (11, 21) qui entourent la face avant de l'appareil de contrôle (10) et la face supérieure du tableau de commande (20).

3. Appareil de contrôle avec tableau de commande selon la revendication 2, **caractérisé en ce que** les extrémités libres (35, 36) des parties de branche (31, 32) sont adaptées au contour des cadres (11, 21).

4. Appareil de contrôle avec tableau de commande selon l'une quelconque des revendications 1 à 3, **caractérisé en ce que** les cadres (11, 21) de l'appareil de contrôle (10) et du tableau de commande (20) se composent de branches de cadre (12, 13, 14, 15, respectivement 22, 23, 24, 25) et de joints d'angle (16, respectivement 26), **en ce que** les parties de branche (31, 32) présentent des logements de vis (41, 44) pour des vis de fixation (50) et **en ce que** les vis de fixation (50) peuvent être vissées dans des canaux de vis qui sont pratiqués dans les joints d'angle (16, respectivement 26).

5. Appareil de contrôle avec tableau de commande selon l'une quelconque des revendications 1 à 4, **caractérisé en ce que** les parties de branche (31, 32) des dispositifs de connexion (30) sont formées en tant que brides de support (33, 34) au niveau des extrémités tournées l'une vers l'autre et sont pourvues d'un alésage fileté (40), respectivement d'un logement (43) pour une vis de connexion (60) ou un levier de connexion.

6. Appareil de contrôle avec tableau de commande selon l'une quelconque des revendications 1 à 5, **caractérisé en ce que** les brides de support (33, 34) des parties de branche (31, 32) sont pourvues sur les côtés tournés l'un vers l'autre de dentures adaptées l'une à l'autre (42, 45) qui sont disposées autour de l'axe, c'est-à-dire l'alésage fileté (40) et le logement (43) pour la vis de connexion (60) ou le levier de connexion, et sont pourvues d'une variation incrémentale de la position angulaire entre les parties de branche (31, 32).

7. Appareil de contrôle avec tableau de commande selon la revendication 6, **caractérisé en ce que** les dents et les espaces entre les dents des dentures formées en tant que bague (42, 45) sont orientés radialement par rapport à l'axe et s'élargissent vers l'extérieur.

8. Appareil de contrôle avec tableau de commande selon l'une quelconque des revendications 1 à 7, **caractérisé en ce que** les parties de branche (31, 32) présentent dans la direction de l'axe une dimension qui correspond à la dimension associée des joints d'angle (16, 26) des cadres (11, 21) et **en ce que** les brides de support (33, 34) présentent dans la direction de l'axe une dimension mutuelle qui correspond à la dimension des parties de branche (31, 32).

9. Appareil de contrôle avec tableau de commande selon l'une quelconque des revendications 1 à 8, **caractérisé en ce que** l'on utilise deux dispositifs de connexion (30) qui sont de forme identique mais relient, avec une rotation de 180°, l'appareil de contrôle (10) et le tableau de commande (20) l'un à l'autre, et **en ce que** les parties de branche (31, 32) des deux dispositifs de connexion (30) sont disposées de telle sorte que les parties de branche (31) reposent avec les alésages filetés (40) sur les côtés tournés l'un vers l'autre et que les parties de branche (32) reposent avec les logements (43) pour les vis de connexion (60) ou le levier de connexion sur les côtés extérieurs opposés des dispositifs de connexion (30).

10. Appareil de contrôle avec tableau de commande selon l'une quelconque des revendications 5 à 9, **caractérisé en ce que** les vis de connexion (60) sont montées dans la partie de branche (32) avec une tête conique et **en ce que** les vis de connexion (60) sont recouvertes par un chapeau de recouvrement (37).
